# EUROPEAN PATENT SPECIFICATION

(11) **EP 2 623 524 B1**
(45) Date of publication and mention of the grant of the patent: **11.01.2017**
(21) Application number: 11828840.6
(22) Date of filing: 16.09.2011
(51) Int. Cl.: C08F 8/28, C08F 8/50, C08F 16/06, C04B 35/634, C04B 35/468, C08F 216/38

(54) **METHOD FOR PRODUCING MODIFIED POLYVINYL ACETAL**
VERFAHREN ZUR HERSTELLUNG VON MODIFIZIERTEM POLYVINYLACETAL
PROCÉDÉ DE PRÉPARATION D'ACÉTAL POLYVINYLIQUE MODIFIÉ

(30) Priority: 31.03.2011 JP 2011080413; 27.09.2010 JP 2010215773
(43) Date of publication of application: 07.08.2013
(73) Proprietor: Sekisui Chemical Co., Ltd., Osaka-shi, Osaka 530-0047 (JP)
(72) Inventor: YAMAGUCHI, Hidehiro, Mishima-gun Osaka 618-0021 (JP); HIROSE, Yuki, Osaka 618-0021 (JP); NAGAI, Yasuharu, Mishima-gun Osaka 618-0021 (JP)
(74) Representative: Hart-Davis, Jason
(86) International application number: PCT/JP2011/071236
(87) International publication number: WO 2012/043280

(56) References cited:
- JP-A- 3 175 404
- JP-A- 9 110 930
- JP-A- 2007 269 881
- JP-B- 47 043 638
- US-A1- 2003 178 608

## Description

### TECHNICAL FIELD

The present invention relates to a modified polyvinyl alcohol enabling to produce polyvinyl acetal that is excellent in solubility in a solvent even with a low degree of polymerization while hardly causing reaction inhibition, coloring, and particle coarsening. The present invention also relates to a method for producing the modified polyvinyl alcohol.

The present invention also relates to a modified polyvinyl acetal that is excellent in solubility in a solvent even with a low degree of polymerization, and has high elasticity, mechanical strength, and a film forming property.

The present invention further relates to a method for producing the modified polyvinyl acetal, a polyvinyl acetal film produced from the modified polyvinyl acetal, a method for producing the polyvinyl acetal film, a ceramic slurry composition, a method for producing the ceramic slurry composition, and a ceramic green sheet.

### BACKGROUND ART

Polyvinyl acetal represented by polyvinyl butyral is widely used for interlayer films for laminated glass, wash primers used in metal treatment, various coating compositions, adhesives, resin treating agents, ceramic binders, and the like. Recently, applications thereof are further extended to electronic materials. Such a variety of applications of polyvinyl acetal are enabled because control of degrees of polymerization and of acetalization thereof can adjust the properties of a resin.

Commonly, polyvinyl acetal is produced by dehydration condensation of polyvinyl alcohol and an aldehyde compound in the presence of an acid catalyst such as hydrochloric acid, as disclosed in Patent Literature 1. Thus produced polyvinyl acetal has a degree of polymerization which is actually determined by the degree of polymerization of the polyvinyl alcohol used as a raw material. Accordingly, for controlling the properties of polyvinyl acetal, polyvinyl alcohol as a raw material needs to be accurately adjusted to have the same degree of polymerization as that of target polyvinyl acetal.

Polyvinyl alcohol is produced by saponification of polyvinyl acetate that is solution-polymerized in methanol. Polyvinyl alcohol produced by a known method, however, is limited to those having a degree of polymerization of about 300 or more in the case of industrial production in view of productivity and quality. It is difficult to obtain polyvinyl acetal having a low degree of polymerization of less than 300.

As a method for producing polyvinyl alcohol having a low degree of polymerization, Patent Literature 2 discloses use of a solvent having a high chain transfer constant in polymerization of vinyl acetate. Further, Patent Literature 3 discloses polymerization of vinyl acetate with addition of a chain transfer agent before and during the polymerization. These methods, however, provide manufacturing problems such as necessities of replacement of a solvent for saponification and recovery of a residual chain transfer agent. Additionally, these methods also provide quality problems such as coloring of purified polyvinyl alcohol and deterioration in solubility in a solvent. Patent Literature 4 discloses a method for reducing a degree of polymerization in which polyvinyl alcohol is subjected to main chain cleavage using an oxidant such as hydrogen peroxide followed by reduction process. However, polyvinyl alcohol subjected to reduction in a degree of polymerization by the method disclosed in Patent Literature 4 is acetalized to problematically provide polyvinyl acetal having a low degree of acetalization due to reaction inhibition or to cause particle coarsening of polyvinyl acetal. Patent Literature 5 similarly discloses a process for producing a polyvinyl acetal resin having a low degree of polymerization by bond cleavage of the main chain with an oxidizing agent followed by acetalization with an aldehyde.

A recent trend of downsizing of electronic devices has demanded smaller and higher-capacity multilayer ceramic capacitors, leading to studies on stacking of thin ceramic green sheets containing finer ceramic powder.

In the thin ceramic green sheet, improvement in properties such as mechanical strength and elasticity is greatly important. Additionally, a ceramic paste used in production of the ceramic green sheet needs to have a film forming property.

However, use of a polyvinyl acetal resin having a high degree of acetalization or a polyvinyl acetal resin having a low average degree of polymerization for the purpose of improvement in the film forming property, for example, may have caused reduced removability of the ceramic green sheet from a base or insufficient mechanical strength and elasticity to withstand removal. As a result, the ceramic green sheet may have been torn or abnormally lengthened.

### CITATION LIST

### Patent Literature

Patent Literature 1: Japanese Kokai Publication No. Hei-06-1853 (JP-A H06-1853)
Patent Literature 2: Japanese Kokai Publication No. Sho-63-278911 (JP-A S63-278911)
Patent Literature 3: Japanese Kokai Publication No. Sho-57-28121 (JP-A S57-28121)
Patent Literature 4: Japanese Kokai Publication No. 2007-269881 (JP-A 2007-269881)
Patent Literature 5: Japanese Kokai Publication No. Hei-09-110930 (JP-A H09-110930)

### SUMMARY OF INVENTION

### Technical Problem

The present invention uses a modified polyvinyl alcohol enabling to produce polyvinyl acetal that is excellent in solubility in a solvent even with a low degree of polymerization while hardly causing reaction inhibition, coloring, and particle coarsening.

The present invention aims to provide a method for producing a modified polyvinyl acetal that is excellent in solubility in a solvent even with a low degree of polymerization and has high elasticity, mechanical strength, and a film forming property. A polyvinyl acetal film may be produced from the modified polyvinyl acetal, as well as a ceramic slurry composition and a ceramic green sheet.

### Solution to Problem

The present invention is defined in the claims.

The present invention is specifically described in the following.

The present inventors have found out the following fact to complete the present invention. Namely, if a modified polyvinyl alcohol used as a raw material of polyvinyl acetal has a specific structure at a molecular end with a degree of saponification and a 1,2-glycol bond content each in a predetermined range, it is possible to produce polyvinyl acetal that is excellent in solubility in a solvent even with a low degree of polymerization while hardly causing reaction inhibition, coloring, and particle coarsening.

The modified polyvinyl alcohol includes at least one functional group selected from the group consisting of hydroxyl, aldehyde, carboxyl, and lactone ring groups at a molecular end.

A functional group at a molecular end changes the polarity of the end, which is expected to improve solubility in water and a surface active effect compared to conventional polyvinyl alcohol. The presence of a functional group at a molecular end can be determined by, for example, ¹H- and ¹³C-NMR.

In the modified polyvinyl alcohol, the lower limit of the degree of saponification is 99.95 mol%.

If the degree of saponification is less than 99.95 mol%, residual acetyl groups inhibit intermolecular interactions by hydroxyl groups of the polyvinyl alcohol. Accordingly, in acetalization, the viscosity of produced polyvinyl acetal cannot be controlled as desired.

In the modified polyvinyl alcohol, the lower limit of the degree of polymerization is preferably 80. The upper limit thereof is preferably 4000. If the degree of polymerization of the modified polyvinyl alcohol is less than 80, the amount of 1,2-glycol bonds present in polyvinyl alcohol as a raw material may not be any more reduced. As a result, control of the degree of polymerization may be hard and coloring may become obvious. If the average degree of polymerization of the polyvinyl alcohol is more than 4000, industrial production of polyvinyl alcohol as a raw material may be hard due to the rate constant for chain polymerization of vinyl acetate.

The lower limit is more preferably 100 and the upper limit is more preferably 3000.

In the modified polyvinyl alcohol, the upper limit of the 1,2-glycol bond content is 1.4 mol%. If the 1,2-glycol bond content is more than 1.4 mol%, residual 1,2-glycol bonds inhibit intermolecular interactions by hydroxyl groups of the polyvinyl alcohol. Accordingly, in acetalization, the viscosity of produced polyvinyl acetal cannot be controlled as desired. The lower limit of the 1,2-glycol bond content in the modified polyvinyl alcohol is preferably 0.55 mol%. The upper limit thereof is preferably 1.2 mol%. The 1,2-glycol bond content can be determined by, for example, ¹H- and ¹³C-NMR.

The modified polyvinyl alcohol is by a method having the step of bringing polyvinyl alcohol into contact with hydrogen peroxide in a basic solution for reduction in a degree of polymerization.

The present inventors have found out the following fact to complete the present invention. Namely, in the method for producing a modified polyvinyl alcohol, if the degree of polymerization of polyvinyl alcohol is reduced by contact with hydrogen peroxide in a basic solution, it is possible to produce a modified polyvinyl alcohol enabling to produce polyvinyl acetal that is excellent in solubility in a solvent even with a low degree of polymerization while hardly causing reaction inhibition, coloring, and particle coarsening.

The method for producing the modified polyvinyl alcohol has the step of bringing polyvinyl alcohol into contact with hydrogen peroxide in a basic solution for reduction in a degree of polymerization (hereinafter, also referred to as a step for reducing the degree of polymerization).

The polyvinyl alcohol used as a raw material is not particularly limited, and may be a conventionally known polyvinyl alcohol. Examples thereof include resins obtained by alkali- or acid-saponification of polyvinyl esters produced by polymerization of vinyl esters by solution polymerization, bulk polymerization, suspension polymerization, emulsion polymerization, or the like. Examples of the vinyl esters include vinyl formate, vinyl acetate, vinyl propionate, vinyl butyrate, vinyl isobutyrate, vinyl pivalate, vinyl laurate, vinyl stearate, and vinyl benzoate.

The polyvinyl alcohol may be completely saponified. Alternatively, the polyvinyl alcohol may be a partially-saponified polyvinyl alcohol, provided that at least one unit having duplex hydroxyl groups relative to a meso position or a raceme position is present in at least one position of the main chain. Usable as the above polyvinyl alcohol are saponified copolymers of vinyl esters and monomers copolymerizable with the vinyl esters, such as ethylene-vinyl alcohol copolymers, and partially-saponified ethylene-vinyl alcohol copolymers.

In the step for reducing the degree of polymerization, the lower limit of the polyvinyl alcohol concentration of the basic solution at the time of the contact of the polyvinyl alcohol and the hydrogen peroxide is preferably 1% by weight. The upper limit thereof is preferably 25% by weight. If the polyvinyl alcohol concentration of the basic solution used in the step for reducing the degree of polymerization is lower than 1% by weight, reaction efficiency may be lowered in acetalization performed in the following step. If the polyvinyl alcohol concentration of the basic solution used in the step for reducing the degree of polymerization is higher than 25% by weight, the viscosity of the solution may be too high, inhibiting stirring thereof. As a result, the degree of polymerization may not be uniformly reduced. In the step for reducing the degree of polymerization, the lower limit of the polyvinyl alcohol concentration in the basic solution is more preferably 3% by weight. The upper limit is more preferably 20% by weight. The lower limit is still more preferably 5% by weight and the upper limit is still more preferably 17% by weight.

The lower limit of the OH⁻ ion concentration of the basic solution at the time of the contact of the polyvinyl alcohol and the hydrogen peroxide is preferably 0.01 mol/L. The upper limit thereof is preferably 1 mol/L. If the OH⁻ion concentration of the basic solution is lower than 0.01 mol/L, the degree of polymerization of the polyvinyl alcohol is less likely to be reduced, resulting in a failure to obtain a target degree of polymerization of the polyvinyl acetal. If the OH⁻ ion concentration of the basic solution is higher than 1 mol/L, polyvinyl acetal produced in the following step has a large ion component. In such a case, the solubility in a solvent may be adversely affected. Further, the amount of an acid catalyst needed for acidification may increase in a step (2), resulting in cost increase. The lower limit of the OH⁻ ion concentration of the basic solution is more preferably 0.1 mol/L. The upper limit thereof is more preferably 0.5 mol/L.

In the step of reducing the degree of polymerization, a basic substance used in the basic solution is not particularly limited. Examples thereof include: alkali metal hydroxides such as sodium hydroxide and potassium hydroxide; hydroxides of alkali earth metals such as calcium hydroxide; silicate salts such as sodium orthosilicate, sodium metasilicate, sodium sesquisilicate, sodium silicate No.1, sodium silicate No. 2, and sodium silicate No. 3; phosphates such as sodium dihydrogen phosphate, disodium hydrogen phosphate, and trisodium phosphate; carbonates such as sodium carbonate, sodium hydrogen carbonate, potassium carbonate, and potassium hydrogen carbonate; borate salts such as sodium borate; inorganic nitrogen compounds such as ammonia and hydroxyamine; and water-soluble primary, secondary, tertiary amines, and quaternary amine in which an alkyl group is combined with the tertiary amine. Preferable among these are alkali metal hydroxides and hydroxides of alkali earth metals. Particularly preferable are sodium hydroxide and potassium hydroxide. Each of these basic substances may be used alone, or two or more of these may be used in combination.

Any solvent may be used in the basic solution, provided that the solvent can dissolve polyvinyl alcohol therein. The solvent is preferably the same as that used in acetalization for avoiding a necessity of replacing a solvent at the time of acetalization of the resulting modified polyvinyl alcohol with a reduced degree of polymerization. Specifically, an aqueous solvent is favorably used.

The amount of the hydrogen peroxide to be added may be changed in accordance with a target degree of polymerization of the polyvinyl acetal. The upper limit of the hydrogen peroxide concentration (maximum concentration of the hydrogen peroxide) of the basic solution is preferably 0.1 mol/L. If the hydrogen peroxide concentration of the basic solution is higher than 0.1 mol/L, the hydrogen peroxide may generate oxygen to allow bubbles formed by the surface activity of the polyvinyl alcohol to remain for a long time. The bubbles cause undissolved polyvinyl alcohol to provide polyvinyl acetal with lowered solubility in a solvent. If the hydrogen peroxide concentration of the basic solution is higher than 0.1 mol/L, acetalization in the following step may not proceed uniformly, leading to variation in the degree of acetalization and the size of precipitated particles. As a result, the obtained polyvinyl acetal may have lowered solubility in a solvent. The upper limit of the hydrogen peroxide concentration of the basic solution is more preferably 0.05 mol/L.

The hydrogen peroxide may be added at a time at an early stage of the reaction, added in portions along with the reaction progress, or continuously added in drops. If the hydrogen peroxide concentration of the basic solution is higher than 0.1 mol/L in the case where it is added at a time, addition in portions or continuous addition in drops can lower the hydrogen peroxide concentration to 0.1 mol/L or lower.

In the step of reducing the degree of polymerization, the lower limit of the temperature at the time of the contact of the polyvinyl alcohol and the hydrogen peroxide is preferably 30°C. The upper limit thereof is preferably 100°C. If the temperature at the time of the contact of the polyvinyl alcohol and the hydrogen peroxide is lower than 30°C, a time period needed for reducing the degree of polymerization of the polyvinyl alcohol may be prolonged. If the temperature at the time of the contact of the polyvinyl alcohol and the hydrogen peroxide is higher than 100°C, the solvent may be volatilized to generate undissolved polyvinyl acetal in the following acetalization step, which may adversely affect the solubility of the resulting polyvinyl acetal in a solvent. The lower limit of the temperature at the time of the contact of the polyvinyl alcohol and the hydrogen peroxide is more preferably 40°C. The upper limit thereof is more preferably 95°C.

In the step of reducing the degree of polymerization, the time period for contacting the polyvinyl alcohol with hydrogen peroxide may be changed in accordance with a target degree of polymerization of the polyvinyl acetal. The contact for 10 minutes to four hours provides a modified polyvinyl alcohol with a reduced degree of polymerization which is aimed in the step of reducing the degree of polymerization.

The method for producing a modified polyvinyl alcohol provides a modified polyvinyl alcohol enabling to produce polyvinyl acetal that has a low degree of polymerization and a high degree of acetalization and is excellent in solubility in a solvent while hardly causing particle coarsening and coloring.

The modified polyvinyl acetal produced by the method of the present invention is obtainable by acetalization of a modified polyvinyl alcohol including at least one functional group selected from the group consisting of hydroxyl, aldehyde, carboxyl, and lactone ring groups at a molecular end, and having a degree of saponification of 99.95 mol% or higher and a 1,2-glycol bond content of 1.4 mol% or lower.

The modified polyvinyl acetal produced by the method of the present invention is specifically described in the following.

The present inventors have found out the following fact. That is, a modified polyvinyl acetal obtained by acetalization of a modified polyvinyl alcohol having a specific structure at a molecular end with the degree of saponification and the 1,2-glycol bond content each in a predetermined range is hardly colored and coarsened since reaction inhibition does not occur. In addition, such a modified polyvinyl acetal is excellent in solubility in a solvent with a low degree of polymerization.

Further, such a modified polyvinyl acetal has excellent film forming property and can provide a green sheet having high elasticity and mechanical strength. Thus, the present invention has been completed.

The modified polyvinyl alcohol has at least one functional group selected from the group consisting of hydroxyl, aldehyde, carboxyl, and lactone ring groups at a molecular end.

Such a functional group at a molecular end changes the polarity to give an effect of enhancing the solubility of the polyvinyl alcohol in a solution in acetalization and the deterioration of thread forming property of the solution. The presence of a functional group at a molecular end can be determined by, for example, ¹H- and ¹³ C-NMR.

The lower limit of the degree of saponification of the modified polyvinyl alcohol is 99.95 mol%.

If the degree of saponification is lower than 99.95 mol%, residual acetyl groups inhibit intermolecular interactions by hydroxyl groups of the polyvinyl alcohol. Accordingly, in acetalization, the viscosity of produced polyvinyl acetal cannot be controlled as desired.

The lower limit of the degree of polymerization of the modified polyvinyl alcohol is preferably 80. The upper limit thereof is preferably 4000. If the degree of polymerization of the modified polyvinyl alcohol is less than 80, acetalization may be hardly performed. If the degree of polymerization of the polyvinyl alcohol is more than 4000, such polyvinyl alcohol may not be synthesized by a known polymerization method due to a chain transfer reaction, being not industrially available. The lower limit is more preferably 100 and the upper limit is more preferably 3000.

The upper limit of the 1,2-glycol bond content of the modified polyvinyl alcohol is 1.4 mol%. If the 1,2-glycol bond content is higher than 1.4 mol%, residual 1,2-glycol bonds inhibit intermolecular interactions by hydroxyl groups of the polyvinyl alcohol. Accordingly, in acetalization, the viscosity of produced polyvinyl acetal cannot be controlled as desired. The lower limit of the 1,2-glycol bond content of the modified polyvinyl alcohol is preferably 0.55 mol%. The upper limit thereof is preferably 1.3 mol%. The upper limit is more preferably 1.2 mol%.

The 1,2-glycol bond content can be determined by, for example, ¹H- and ¹³C-NMR.

The modified polyvinyl acetal produced by the method of the present invention is obtainable by acetalization of the modified polyvinyl alcohol. Hereinafter, this acetalization is also referred to as the acetalization step.

The acetalization step is carried out, for example, by a method in which the modified polyvinyl alcohol is reacted with aldehyde in a system acidified by an acid catalyst.

In the acetalization step, a conventionally known method may be used as the method for obtaining a modified polyvinyl acetal by reacting the modified polyvinyl alcohol with aldehyde for acetalization. For example, in the case of obtaining a modified polyvinyl butyral, an aqueous solution containing 1 to 25% by weight of polyvinyl alcohol with a degree of polymerization reduced by hydrogen peroxide is prepared. The polyvinyl alcohol is brought into contact with an acid catalyst and butyl aldehyde in a temperature range of -5 to 60°C, and the reaction is allowed to proceed for 20 minutes to six hours. Then, the temperature is raised by 10 to 50°C and the solution is aged for 30 minutes to five hours to complete the reaction. Preferably after cooling, precipitated modified polyvinyl butyral is rinsed.

The acid catalyst is not particularly limited, and examples thereof include: hydrogen halide such as hydrochloric acid; mineral acids such as nitric acid and sulfuric acid; carboxylic acids such as formic acid, acetic acid, and propionic acid; sulfonic acids such as methanesulfonic acid, ethanesulfonic acid, benzenesulfonic acid, and paratoluenesulfonic acid; and phosphoric acids. Each of these acid catalysts may be used alone, or two or more of these may be used in combination. Among these, hydrochloric acid, nitric acid, and sulfuric acid are preferable, and hydrochloric acid is particularly preferable.

Examples of the aldehyde include, for example, linear, branched, cyclic saturated, cyclic unsaturated, and aromatic aldehydes having 1 to 19 carbon atoms. Specific examples thereof include formaldehyde, acetaldehyde, propionyl aldehyde, n-butyl aldehyde, isobutyl aldehyde, tert-butyl aldehyde, benzaldehyde, and cyclohexyl aldehyde. Each of these aldehydes may be used alone, or two or more of these may be used in combination. The aldehydes, other than formaldehyde, may have one or more hydrogen atoms replaced by halogens or the like.

The degree of acetalization of the modified polyvinyl acetal produced by the method of the present invention can be adjusted by appropriately changing the amount of the aldehyde added to the modified polyvinyl alcohol. The lower limit thereof is preferably 60 mol%, and the upper limit thereof is preferably 75 mol%. If the degree of acetalization is lower than 60 mol%, residual hydroxyl groups may prolong the time period of dissolution in a solvent and cause formation of a lot of insoluble resins. If the degree of acetalizatoin is higher than 75 mol%, residual aldehydes may form intermolecular acetal, resulting in nonuniform viscosity from one lot to another.

The lower limit of the amount of hydroxyl groups in the modified polyvinyl acetal produced by the method of the present invention is preferably 25 mol%. The upper limit thereof is preferably 40 mol%. If the amount of hydroxyl groups is less than 25 mol%, residual aldehydes may form intermolecular acetal, resulting in nonuniform viscosity from one lot to another. If the amount of hydroxyl groups is more than 40 mol%, the time period of dissolution in the solvent may be prolonged and a lot of insoluble resins may be formed.

The modified polyvinyl acetal produced by the method of the present invention is obtainable by a method having the steps of: step (1) of bringing polyvinyl alcohol into contact with hydrogen peroxide in a basic solution for reduction in a degree of polymerization, thereby preparing a modified polyvinyl alcohol, and step (2) of reacting the modified polyvinyl alcohol prepared in the step (1) with aldehyde in a system acidified by an acid catalyst for acetalization of the modified polyvinyl alcohol.

The present inventors have found out the following facts to complete the present invention. That is, in the method for producing polyvinyl acetal in which polyvinyl alcohol is reacted with aldehyde in the presence of an acid catalyst, a modified polyvinyl alcohol with a degree of polymerization reduced by contact with hydrogen peroxide in a basic solution is used as polyvinyl alcohol to be reacted with aldehyde. In such a case, it is possible to produce a modified polyvinyl acetal that is excellent in solubility in a solvent with a low degree of polymerization while hardly causing reaction inhibition, coloring, and particle coarsening.

The method for producing the modified polyvinyl acetal of the present invention has step (1) of bringing polyvinyl alcohol into contact with hydrogen peroxide in a basic solution for reduction in a degree of polymerization, thereby preparing a modified polyvinyl alcohol.

The polyvinyl alcohol is not particularly limited, and may be a conventionally known polyvinyl alcohol. Examples thereof include resins obtained by alkali- or acid-saponification of polyvinyl esters produced by polymerization of vinyl esters by solution polymerization, bulk polymerization, suspension polymerization, emulsion polymerization, or the like. Examples of the vinyl esters include vinyl formate, vinyl acetate, vinyl propionate, vinyl butyrate, vinyl isobutyrate, vinyl pivalate, vinyl laurate, vinyl stearate, and vinyl benzoate.

The polyvinyl alcohol may be completely saponified. Alternatively, the polyvinyl alcohol may be a partially-saponified polyvinyl alcohol, provided that at least one unit having duplex hydroxyl groups relative to a meso position or a raceme position is present in at least one position of the main chain. Usable as the above polyvinyl alcohol are saponified copolymers of vinyl esters and monomers copolymerizable with the vinyl esters, such as ethylene-vinyl alcohol copolymers and partially-saponified ethylene-vinyl alcohol copolymers.

The lower limit of the degree of polymerization of the polyvinyl alcohol is preferably 200. The upper limit thereof is preferably 4000. The lower limit is more preferably 300 and the upper limit is more preferably 3000.

In the step (1), the lower limit of the polyvinyl alcohol concentration of the basic solution at the time of the contact of the polyvinyl alcohol and the hydrogen peroxide is preferably 1% by weight. The upper limit thereof is preferably 25% by weight. If the polyvinyl alcohol concentration of the basic solution used in the step (1) is lower than 1% by weight, reaction efficiency of the resulting polyvinyl alcohol may be lowered in acetalization in the step (2). If the polyvinyl alcohol concentration of the basic solution used in the step (1) is higher than 25% by weight, the solution may have too high viscosity to be hardly stirred, leading to a failure in uniform reduction in the degree of polymerization. The lower limit of the polyvinyl alcohol concentration of the basic solution used in the step (1) is more preferably 3% by weight. The upper limit thereof is more preferably 20% by weight. The lower limit is still more preferably 5% by weight and the upper limit is still more preferably 17% by weight.

The lower limit of the OH⁻ ion concentration of the basic solution at the time of the contact of the polyvinyl alcohol and the hydrogen peroxide is preferably 0.01 mol/L. The upper limit thereof is preferably 1 mol/L. If the OH⁻ion concentration of the basic solution is lower than 0.01 mol/L, the degree of polymerization of the polyvinyl alcohol is less likely to be reduced, resulting in a failure to obtain a target degree of polymerization of the polyvinyl acetal. If the OH- ion concentration of the basic solution is higher than 1 mol/L, polyvinyl acetal produced in the step (2) has a large ion component. In such a case, the solubility in a solvent may be adversely affected. Further, the amount of an acid catalyst needed for acidification may increase in the step (2), resulting in cost increase. The lower limit of the OH⁻ ion concentration of the basic solution is more preferably 0.1 mol/L. The upper limit thereof is more preferably 0.5 mol/L.

In the step (1), a basic substance used in the basic solution is not particularly limited. Examples thereof include: alkali metal hydroxides such as sodium hydroxide and potassium hydroxide; hydroxides of alkali earth metals such as calcium hydroxide; silicate salts such as sodium orthosilicate, sodium metasilicate, sodium sesquisilicate, sodium silicate No.1, sodium silicate No. 2, and sodium silicate No. 3; phosphates such as sodium dihydrogen phosphate, disodium hydrogen phosphate, and trisodium phosphate; carbonates such as sodium carbonate, sodium hydrogen carbonate, potassium carbonate, and potassium hydrogen carbonate; borate salts such as sodium borate; inorganic nitrogen compounds such as ammonia and hydroxyamine; and water-soluble primary, secondary, tertiary amines, and quaternary amine in which an alkyl group is combined with the tertiary amine. Preferable among these are alkali metal hydroxides and hydroxides of alkali earth metals. Particularly preferable are sodium hydroxide and potassium hydroxide. Each of these basic substances may be used alone, or two or more of these may be used in combination.

Any solvent may be used in the basic solution, provided that the solvent can dissolve polyvinyl alcohol therein. The solvent is preferably the same as that used in acetalization for avoiding a necessity of replacing a solvent at the time of acetalization of the resulting modified polyvinyl alcohol with a reduced degree of polymerization in the step (2). Specifically, an aqueous solvent is favorably used.

The amount of the hydrogen peroxide to be added may be changed in accordance with a target degree of polymerization of the modified polyvinyl acetal. The upper limit of the hydrogen peroxide concentration (maximum concentration of the hydrogen peroxide) of the basic solution is 0.5 mol/L. If the hydrogen peroxide concentration of the basic solution is higher than 0.5 mol/L, the hydrogen peroxide may generate oxygen to allow bubbles formed by the surface activity of the polyvinyl alcohol to remain for a long time. The bubbles cause undissolved polyvinyl alcohol to provide a modified polyvinyl acetal with lowered solubility in a solvent in the step (2). If the hydrogen peroxide concentration of the basic solution is higher than 0.5 mol/L, acetalization in the step (2) may not proceed uniformly, leading to variation in the degree of acetalization and the size of precipitated particles. As a result, the obtained modified polyvinyl acetal may have lowered solubility in a solvent. The upper limit of the hydrogen peroxide concentration of the basic solution is more preferably 0.3 mol/L.

The hydrogen peroxide may be added at a time at an early stage of the reaction, added in portions along with the reaction progress, or continuously added in drops. If the hydrogen peroxide concentration of the basic solution is higher than 0.5 mol/L in the case where it is added at a time, addition in portions or continuous addition in drops can lower the hydrogen peroxide concentration to 0.5 mol/L or lower.

In the step (1), the lower limit of the temperature at the time of the contact of the polyvinyl alcohol and the hydrogen peroxide is preferably 30°C. The upper limit thereof is preferably 100°C. If the temperature at the time of the contact of the polyvinyl alcohol and the hydrogen peroxide is lower than 30°C, a time period needed for reducing the degree of polymerization of the polyvinyl alcohol may be prolonged. If the temperature at the time of the contact of the polyvinyl alcohol and the hydrogen peroxide is higher than 100°C, the solvent may be volatilized to generate undissolved polyvinyl acetal in the step (2), which may adversely affect the solubility of the resulting polyvinyl acetal in a solvent. The lower limit of the temperature at the time of the contact of the polyvinyl alcohol and the hydrogen peroxide is more preferably 40°C. The upper limit thereof is more preferably 95°C.

In the step (1), the time period for contacting the polyvinyl alcohol with hydrogen peroxide may be changed in accordance with a target degree of polymerization of the modified polyvinyl acetal. The contact for 10 minutes to four hours provides a modified polyvinyl alcohol with a reduced degree of polymerization which is aimed in the step (1) .

The method for producing the modified polyvinyl acetal of the present invention has the step (2) of reacting the modified polyvinyl alcohol prepared in the step (1) with aldehyde in a system acidified by an acid catalyst for acetalization of the modified polyvinyl alcohol.

In the step (2), a conventionally known method may be used as the method for obtaining a modified polyvinyl acetal by reacting the modified polyvinyl alcohol with a reduced degree of polymerization and aldehyde for acetalization. For example, in the case of obtaining a modified polyvinyl butyral, an aqueous solution containing 1 to 25% by weight of modified polyvinyl alcohol with a degree of polymerization reduced by hydrogen peroxide is prepared. The modified polyvinyl alcohol is brought into contact with an acid catalyst and butyl aldehyde in a temperature range of -5 to 30°C, and the reaction is allowed to proceed for 20 minutes to six hours. Then, the temperature is raised by 10 to 50°C and the solution is aged for 30 minutes to five hours to complete the reaction. Preferably after cooling, precipitated modified polyvinyl butyral is rinsed.

In the step (2), the hydrogen peroxide concentration of the system at the time of the acidification by an acid catalyst is preferably 0.1 mol/L or lower. If the hydrogen peroxide concentration of the system at the time of the acidification by an acid catalyst is higher than 0.1 mol/L, the hydrogen peroxide concentration may not be lowered, inhibiting acetalization. In such a case, the resulting modified polyvinyl acetal has a lower degree of acetalization. Further, the produced polyvinyl acetal is not in a powdery form but in a coarse particle form, which leads to insufficient rinsing and drying. As a result, the quality is adversely affected.

In the step (2), the hydrogen peroxide concentration of the system at the time of the contact of the modified polyvinyl alcohol with a reduced degree of polymerization and the aldehyde is preferably 0.1 mol/L or lower. If the hydrogen peroxide concentration is higher than 0.1 mol/L, prior to the reaction between the modified polyvinyl alcohol and the aldehyde, the aldehyde may form an adduct with hydrogen peroxide to inhibit acetalization. In such a case, the resulting modified polyvinyl acetal has a lower degree of acetalization. Further, the produced polyvinyl acetal is not in a powdery form but in a coarse particle form, which leads to insufficient rinsing and drying. As a result, the quality is adversely affected.

The following is an exemplary method for adjusting the hydrogen peroxide concentration of the system at the time of the acidification by an acid catalyst and the hydrogen peroxide concentration of the system at the time of the contact of the modified polyvinyl alcohol with a reduced degree of polymerization and the aldehyde, to 0.1 mol/L or lower. The conditions of the step (1), such as the amount of hydrogen peroxide to be added, the time period, and the temperature, may be appropriately adjusted to achieve the hydrogen peroxide concentration within the above range in consideration of consumption of the hydrogen peroxide in reduction in the degree of polymerization of the polyvinyl alcohol. In the transitional phase from the step (1) to the step (2), if the hydrogen peroxide concentration is higher than 0.1 mol/L, the hydrogen peroxide concentration can be also adjusted to the above range by addition of a compound promoting degradation of hydrogen peroxide, or by addition of a compound initiating an oxidation reduction reaction with hydrogen peroxide.

Examples of the compound promoting degradation of hydrogen peroxide include manganese dioxide and catalase. Examples of the compound initiating an oxidation reduction reaction with hydrogen peroxide include potassium permanganate and potassium dichromate.

In the step (2), the temperature at the time of the contact of the modified polyvinyl alcohol and the aldehyde in the case of acetalization is preferably not higher than the boiling point of the aldehyde to be used.

The above temperature range allows controlling of the viscosity of the solution not depending on the degree of polymerization of polyvinyl alcohol used as a raw material.

If the temperature when the aldehyde is added is highr than the boiling point of the aldehyde, the aldehyde may be volatilized during addition, so that acetalization does not proceed sufficiently.

Specifically, the temperature at the time of the contact of the modified polyvinyl alcohol and the aldehyde is preferably 5 to 70°C. If the temperature is lower than 5°C, the modified polyvinyl alcohol may gelate to form an undissolved product. As a result, the resulting polyvinyl acetal used as a binder may have a lowered film forming property. If the temperature is higher than 70°C, typical aldehyde used in synthesis of polyvinyl acetal may be volatilized, so that acetalization does not proceed sufficiently. The temperature is more preferably 10 to 65°C.

The acid catalyst and an aldehyde used in the step (2) may be the same as those used in the acetalization step.

The modified polyvinyl acetal produced by the method of the present invention is formed into a film to provide a polyvinyl acetal film.

When the lower limit of the degree of saponification of the modified polyvinyl acetal is 99.95 mol%, the polyvinyl acetal film is allowed to be highly elastic.

If the lower limit of the degree of saponification of the modified polyvinyl acetal is lower than 99.95 mol%, the influence of hydrogen bonds derived from hydroxyl groups among the modified polyvinyl acetal is lowered to reduce the binding power between molecular chains. As a result, the modulus of elasticity is lowered.

When the upper limit of the 1,2-glycol bond content of the modified polyvinyl acetal is 1.4 mol%, the polyvinyl acetal film is allowed to have excellent flexibility. If the 1,2-glycol bond content is higher than 1.4 mol%, residual 1,2-glycol bonds lower the influence of hydrogen bonds derived from hydroxyl groups among the polyvinyl acetal to lower the binding power between molecular chains. As a result, the modulus of elasticity is lowered when the modified polyvinyl acetal is formed into a film.

The lower limit of the 1,2-glycol bond content of the modified polyvinyl acetal is preferably 0.55 mol%. If the 1,2-glycol bond content is lower than 0.55 mol%, the molecular chains are not sufficiently untangled, lowering the solubility. As a result, undissolved products are formed, leading to reduction in the maximum point stress of the sheet strength.

The polyvinyl acetal film is, for example, produced by a method having the step of heating to dissolve the modified polyvinyl acetal produced by the method of the present invention at 40°C or higher. If the temperature for heating dissolution is lower than 40°C, hydrogen bonds of molecular chains may not be sufficiently untangled. As a result, undissolved products are formed, leading to reduction in the maximum point stress of the sheet strength.

The temperature for heating dissolution of 40°C or higher can provide a polyvinyl acetal film having excellent flexibility.

To the modified polyvinyl acetal produced by the method of the present invention, ceramic powder and an organic solvent are added to prepare a ceramic slurry composition.

The ceramic slurry composition contains ceramic powder.

The ceramic powder is not particularly limited, and examples thereof include barium titanate, alumina, zirconia, and glass powder.

The ceramic powder content of the ceramic slurry composition is not particularly limited. The lower limit thereof relative to the total of the resin component and the ceramic powder is preferably 50% by weight. The upper limit thereof is preferably 99% by weight. If the ceramic powder content is lower than 50% by weight, though a ceramic green sheet with sufficient sheet strength can be produced, the volume shrinkage of the sheet after degreasing by firing may be great. In addition, since a green sheet tends to have cracks, a ceramic layer may be hardly formed. If the ceramic powder content is higher than 99% by weight, ceramic powder may be hardly bound together.

The lower limit is more preferably 80% by weight and the upper limit is more preferably 97% by weight. The lower limit is still more preferably 90% by weight and the upper limit is still more preferably 95% by weight.

The ceramic slurry composition contains an organic solvent.

The organic solvent is not particularly limited, provided that it can dissolve the polyvinyl acetal resin therein. Examples thereof include: ketones such as acetone, methyl ethyl ketone, dipropyl ketone and diisobutyl ketone; alcohols such as methanol, ethanol, isopropanol, and butanol; aromatic hydrocarbons such as toluene and xylene; esters such as methyl propionate, ethyl propionate, butyl propionate, methyl butanoate, ethyl butanoate, butyl butanoate, methyl pentanoate, ethyl pentanoate, butyl pentanoate, methyl hexanoate, ethyl hexanoate, butyl hexanoate, 2-ethylhexyl acetate, and 2-ethylhexyl butyrate; and methyl cellusolve, ethyl cellusolve, butyl cellusolve, terpineol, dihydroterpineol, butyl cellusolve acetate, butyl carbitol acetate, terpineol acetate, and dihydroterpineol acetate. In particular, alcohols, ketones, aromatic hydrocarbons, and mixed solvents of these are preferable in terms of an application property and a drying property.

The ceramic slurry composition may optionally contain dispersants, antioxidants, ultraviolet absorbers, surfactants, and fillers, as appropriate. In some cases, small amounts of other resins such as epoxy and acrylic resins may be added.

A method for producing the ceramic slurry composition is not particularly limited, and examples thereof include mixing of the modified polyvinyl acetal resin, ceramic powder, an organic solvent, and various additives according to need with a mixer such as a ball mill, a blender mill, and a three roller mill.

In the case of producing the ceramic slurry composition, the modified polyvinyl acetal is preferably heated at 40°C or higher to be dissolved in the step of adding and mixing the modified polyvinyl acetal resin.

The temperature for heating dissolution of 40°C or higher can provide a ceramic slurry composition having excellent film forming property.

A ceramic green sheet may be produced from the ceramic slurry composition.

The ceramic green sheet is produced, for example, by the following method. The ceramic slurry composition is applied onto a polyester film preliminary subjected to mold release treatment, in such a manner that the dried composition has an appropriate thickness. The composition is air-dried for one hour at an ambient temperature. Next, the composition is further dried using a hot-air drying apparatus at 80°C for three hours and at 120°C for two hours. Then, UV irradiation is performed and/or the ceramic green sheet itself is heated for curing the curable resin.

### Advantageous Effects of Invention

The present invention uses a modified polyvinyl alcohol enabling to produce polyvinyl acetal that is excellent in solubility in a solvent even with a low degree of polymerization while hardly causing reaction inhibition, coloring, and particle coarsening.

The present invention provides a method of producing a modified polyvinyl acetal that is excellent in solubility in a solvent even with a low degree of polymerization, and has high elasticity, mechanical strength, and a film forming property. A polyvinyl acetal film may be produced from the modified polyvinyl acetal, as well as a ceramic slurry composition and a ceramic green sheet.

### DESCRIPTION OF EMBODIMENTS

The following will discuss embodiments of the present invention based on examples. The present invention is not limited only to these examples. It is to be noted that Examples 8 and 9 are not Examples according to the invention as defined in the appended claims.

### (Example 1)

### (Preparation of a polyvinyl alcohol aqueous solution)

Polyvinyl alcohol (degree of saponification: 99%, degree of polymerization: 1700) (100 g) and ion exchanged water (865 g) were heated with stirring in a 2-L separable flask at 95°C for one hour at 150 rpm, thereby preparing a polyvinyl alcohol aqueous solution.

### (Modification step)

The temperature was lowered to 60°C with stirring. Then, 20% by weight of a sodium hydroxide aqueous solution was added to the solution to adjust the OH⁻ ion concentration of the solution to 0.1 mol/L. Further, aqueous hydrogen peroxide (5.6 g) having a concentration of 30% by weight was added to the solution to adjust the hydrogen peroxide concentration of the solution to 0.025 mol/L. After addition of hydrogen peroxide, the solution was allowed to react for two hours to give a modified polyvinyl alcohol.

### (Examples 2 and 3)

Modified polyvinyl alcohols were produced in the same manner as in Example 1, except that the amounts of the sodium hydroxide aqueous solution and the aqueous hydrogen peroxide were changed as shown in Table 1 in the Modification step of Example 1.

### (Comparative Example 1)

Modified polyvinyl alcohol was produced in the same manner as in Example 1, except that the sodium hydroxide aqueous solution was not added and only the aqueous hydrogen peroxide was added, and that the solution was heated at 60°C for two hours in the Modification step of Example 1.

### (Comparative Example 2)

Modified polyvinyl alcohol was produced in the same manner as in Example 1, except that the aqueous hydrogen peroxide was not added and only the sodium hydroxide aqueous solution was added, and that the solution was heated at 60°C for two hours in the Modification step of Example 1.

### <Evaluation>

The following items of the modified polyvinyl alcohols produced in the examples and comparative examples were evaluated. Table 1 shows the results.

### (1) Degree of polymerization

The obtained polyvinyl alcohol (2 g) was added to ethanol (25 g). To the mixture, a solution (10 ml) containing hydroxylamine hydrochloride (15 g) dissolved in ion exchanged water (100 g), and hydrochloric acid (5 ml) were added. The mixture was heated in a boiling water bath for three hours. After cooling, the mixture was neutralized with aqueous ammonia. Then, methanol was added to the mixture for precipitation of a resin. The resin was rinsed with methanol and dried. The dried resin was heated to be dissolved in water (100 g). Using the resulting solution, the degree of polymerization was measured in conformity with JIS K6726.

### (2) NMR measurement

The obtained polyvinyl alcohol solution was diluted to 5% by weight and then reprecipitated in five volumes of aceton. The precipitated polyvinyl alcohol was recovered, dried at 80°C for four hours, and dissolved in DMSO-d₆. Using the obtained polyvinyl alcohol solution, the degree of saponification and the 1,2-glycol bond content were measured by ¹H- and ¹³C-NMR (JEOL Ltd., JNM-AL). Also, the structure of a molecular end of the polyvinyl alcohol was analyzed.

### (3) Production of polyvinyl acetal (polyvinyl butyral)

To each of the polyvinyl alcohol solution obtained in the examples and the comparative examples, 25 wt% hydrochloric acid (130 g) and butyl aldehyde (58 g) were added, and the resulting polyvinyl alcohol solution was acetalized for 180 minutes. Then, the temperature of the solution was raised to 40°C over 60 minutes. The solution was further allowed to react for 120 minutes at that temperature. After cooling to room temperature, the precipitated resin was recovered by filtering. The resin component was rinsed with ion exchanged water. The resulting resin was rinsed with a sodium carbonate aqueous solution and then rinsed again with water. The resin was dried to provide polyvinyl butyral. The following (3-1) to (3-4) of the resulting polyvinyl butyral were evaluated.

### (3-1) Degree of butyralization

The obtained polyvinyl butyral (10 mg) was dissolved in deuterated dimethylsufoxide (1.0 g), and the degree of butyralization was determined by ¹H-NMR measurement.

### (3-2) Resin particle size

To a 4 wt% resin suspension of the obtained polyvinyl butyral, 0.1% by weight of a surfactant (Kao Corporation, EMAL) was added. The resulting suspension was subjected to dispersion by an ultrasonic washing machine for 10 minutes. The average particle size was measured using a particle size analyzer (HORIBA Ltd., LA950V2). The measured value was determined as a resin particle size.

### (3-3) Coloring

Coloring of the obtained polyvinyl butyral was visually evaluated based on the following criteria: "○" in the case of white color; "Δ" in the case of slight yellowing; and "X" in the case of coloring in yellow or brown.

### (3-4) Solubility in a solvent

The obtained polyvinyl butyral (15 g) was added to a mixed solvent containing ethanol and toluene (mixed ratio by weight of 1:1) (135 g), and the mixture was shaken at room temperature for two hours. The mixture was then allowed to stand still and visually evaluated based on the following criteria: "○" in the case where no resin was left undissolved in the solvent; "Δ" in the case where the resin was slightly left undissolved in the solvent; and "X" in the case where the resin was much left undissolved in the solvent.

**[Table 1]**

| | Concentration in modification step | | Polyvinyl alcohol properties | | | | | Polyvinyl acetal properties | | | |
|---|---|---|---|---|---|---|---|---|---|---|---|
| | OH⁻ ion concentration (mol/L) | Hydrogen peroxide concentration (mol/L) | Degree of polymerization of raw material PVA | Degree of polymerization of modified PVA | Degree of saponification (mol%) | 1,2-glycol bond content (mol%) | Functional group at the molecular end | Degree of butyralization (mol%) | Coloring | Solubility in a solvent | Resin particle size (µm) |
| Example 1 | 0.1 | 0.025 | 1700 | 820 | >99.95 | 1.40 | Methyl, Hydroxyl, Aldehyde, Lactone ring, Carboxyl | 69.3 | ○ | ○ | 53 |
| Example 2 | 0.1 | 0.05 | 1700 | 560 | >99.95 | 1.23 | Methyl, Hydroxyl, Aldehyde, Lactone ring, Carboxyl | 70.2 | ○ | ○ | 68 |
| Example 3 | 0.1 | 0.1 | 1700 | 360 | >99.95 | 1.08 | Methyl, Hydroxyl, Aldehyde, Lactone ring, Carboxyl | 67.9 | ○ | ○ | 73 |
| Comparative Example 1 | 0 | 0.1 | 1700 | 1320 | 98.4 | 1.52 | Methyl, Hydroxyl | 64.5 | Δ | × | 800 |
| Comparative Example 2 | 0.1 | 0 | 1700 | 1450 | >99.95 | 1.60 | Methyl, Hydroxyl | 69.3 | × | Δ | 260 |

### (Example 4)

### (Preparation of a polyvinyl alcohol aqueous solution)

Polyvinyl alcohol (degree of saponification: 99%, degree of polymerization: 1700) (100 g) and ion exchanged water (865 g) were heated with stirring in a 2-L separable flask at 95°C for one hour at 150 rpm, thereby preparing a polyvinyl alcohol aqueous solution.

### (Modification step)

The temperature was lowered to 60°C with stirring. Then, 20% by weight of a sodium hydroxide aqueous solution was added to the solution to adjust the OH⁻ ion concentration of the solution to 0.1 mol/L. Further, aqueous hydrogen peroxide (5.6 g) having a concentration of 30% by weight was added to the solution to adjust the hydrogen peroxide concentration of the solution to 0.05 mol/L. After addition of hydrogen peroxide, the solution was allowed to react for two hours to give a solution containing a modified polyvinyl alcohol.

### (Acetalization step)

The solution containing the modified polyvinyl alcohol was heated to 70°C. Then, 25 wt% hydrochloric acid (130 g) and butyl aldehyde (58 g) were added to the solution. The solution was gradually cooled to 3°C and acetalized for 180 minutes. Then, the temperature of the solution was raised to 40°C over 60 minutes. The solution was further allowed to react for 120 minutes at that temperature. After cooling to room temperature, the precipitated resin was recovered by filtering. The resin component was rinsed with ion exchanged water. The resulting resin was rinsed with a sodium carbonate aqueous solution and then rinsed again with water. The resulting resin was dried to provide a modified polyvinyl butyral.

### (Example 5)

A modified polyvinyl butyral was produced in the same manner as in Example 4, except that the temperature when butyl aldehyde was added was changed to 60°C in the Acetalization step of Example 4.

### (Example 6)

A modified polyvinyl butyral was produced in the same manner as in Example 4, except that the temperature when butyl aldehyde was added was changed to 15°C in the Acetalization step of Example 4.

### (Example 7)

A modified polyvinyl butyral was produced in the same manner as in Example 4, except that the temperature when butyl aldehyde was added was changed to 5°C in the Acetalization step of Example 4.

### (Comparative Example 3)

A polyvinyl alcohol aqueous solution was prepared in the same manner as in Comparative Example 1.

Using the prepared polyvinyl alcohol aqueous solution, the Acetalization step was performed by the same method as in Example 4 to produce polyvinyl butyral.

### (Comparative Example 4)

A polyvinyl butyral was produced in the same manner as in Example 4, except that the temperature when butyl aldehyde was added was changed to 15°C in the Acetalization step of Comparative Example 3.

### (Comparative Example 5)

### (Preparation of a polyvinyl alcohol aqueous solution)

Polyvinyl alcohol (degree of saponification: 98.2%, degree of polymerization: 500) (100 g) and ion exchanged water (865 g) were heated with stirring in a 2-L separable flask at 95°C for one hour at 150 rpm, thereby preparing polyvinyl alcohol aqueous solution.

### (Acetalization step)

The solution containing polyvinyl alcohol was heated to 70°C. Then, 25 wt% hydrochloric acid (130 g) and butyl aldehyde (55 g) were added to the solution at 60°C. The solution was acetalized for 180 minutes while being cooled. Then, the temperature of the solution was raised to 40°C over 60 minute. The solution was further allowed to react for 120 minutes at that temperature. After cooling to room temperature, the precipitated resin was recovered by filtering. The resin component was rinsed with ion exchanged water. The resulting resin was rinsed with a sodium carbonate aqueous solution and then rinsed again with water. The resulting resin was dried to give polyvinyl butyral.

### (Comparative Example 6)

Polyvinyl butyral was produced in the same manner as in Example 4, except that the temperature when butyl aldehyde was added was changed to 15°C in the Acetalization step of Comparative Example 5.

### (Example 8) (not according to the invention)

Polyvinyl butyral was produced in the same manner as in Example 4, except that hydrogen peroxide and sodium hydroxide were added in such a manner as to set the concentration as shown in Table 2.

### (Example 9) (not according to the invention)

Polyvinyl butyral was produced in the same manner as in Example 4, except that the temperature when butyl aldehyde was added was changed to 15°C in the Acetalization step of Example 8.

### <Evaluation>

The following items of the polyvinyl alcohols used in Examples 4 to 9 and Comparative Examples 3 to 6 and the polyvinyl butyrals produced in Examples 4 to 9 and Comparative Examples 3 to 6 were evaluated. Table 2 shows the results.

### (1) NMR measurement

Each of the polyvinyl alcohol solutions used in the examples and the comparative examples was diluted to 5% by weight and then reprecipitated in five volumes of acetone. The precipitated polyvinyl alcohol was recovered, dried at 80°C for four hours, and dissolved in DMSO-d₆. Using the obtained polyvinyl alcohol solution, the degree of saponification and the 1,2-glycol bond content of were measured by ¹H- and ¹³C-NMR (JEOL Ltd., JNM-AL). Also, the structure of a molecular end of the polyvinyl alcohol was analyzed.

### (2) Degree of polymerization

The obtained polyvinyl butyral (2 g) was added to ethanol (25 g). To the mixture, a solution (10 ml) containing hydroxylamine hydrochloride (15 g) dissolved in ion exchanged water (100 g), and hydrochloric acid (5 ml) were added. The mixture was heated in a boiling water bath for three hours. After cooling, the mixture was neutralized with aqueous ammonia. Then, methanol was added to the mixture for precipitation of a resin. The resin was rinsed with methanol and dried. The dried resin was heated to be dissolved in water (100 g). Using the resulting solution, the degree of polymerization was measured in conformity with JIS K 6726.

### (3) Degree of butyralization

The obtained polyvinyl butyral (10 mg) was dissolved in deuterated dimethylsulfoxide (1.0 g), and the degree of butyralization was measured by ¹H-NMR measurement.

### (4) Solution viscosity

The obtained polyvinyl butyral was dissolved in a mixed solvent (ethanol:toluene = 1:1) to provide a 10 wt% solution. Using a B-type viscometer (BROOKFIELD ENGINEERING LABS, DV-II+Pro), the solution viscosity of the obtained solution was measured under conditions of the solution temperature of 20°C and at 10 to 120 rpm.

### (5) Resin particle shape

The obtained polyvinyl butyral was passed through a sieve (aperture of 1 mm) for evaluation of particle shape based on the following criteria: "○" in the case where almost all the resin passed through the sieve; "Δ" in the case where about half of the resin passed through the sieve; and "X" in the case where the resin hardly passed through the sieve.

### (6) Coloring

Coloring of the obtained polyvinyl butyral was visually evaluated based on the following criteria: "○" in the case of white color; "Δ" in the case of slight yellowing; and "X" in the case of coloring in yellow or brown.

### (7) Solubility in a solvent

The obtained polyvinyl butyral (15 g) was added to a mixed solvent containing ethanol and toluene (mixed ratio by weight of 1:1) (135 g), and the mixture was shaken at room temperature for two hours. The mixture was then allowed to stand still and visually evaluated based on the following criteria: "○" in the case where no resin was left undissolved in the solvent; "Δ" in the case where the resin was slightly left undissolved in the solvent; and "X" in the case where the resin was much left undissolved in the solvent.

**[Table 2]**

| | Concentration in modification step | | Polyvinyl alcohol properties | | | | | Acetalization step | Polyvinyl acetal properties | | | | |
|---|---|---|---|---|---|---|---|---|---|---|---|---|---|
| | OH⁻ ion concentration (mol/L) | Hydrogen peroxide concentration (mol/L) | Degree of polymerization of raw material PVA | Degree of polymerization of modified PVA | Degree of saponification (mol%) | 1,2-glycol bond content (mol%) | Functional group at the molecular end | Temperature at addition of butylaldehyde (°C) | Degree of butyralization (mol%) | Solution viscosity (mPa·s) | Resin particle shape | Coloring | Solubility in a solvent |
| Example 4 | 0.1 | 0.05 | 1700 | 560 | >99.95 | 1.23 | Methyl, Hydroxyl, Aldehyde, Lactone ring, Carboxyl | 70 | 67.1 | 110 | ○ | ○ | ○ |
| Example 5 | | | | | | | | 60 | 67.5 | 200 | ○ | ○ | ○ |
| Example 6 | | | | | | | | 15 | 68.2 | 710 | ○ | ○ | ○ |
| Example 7 | | | | | | | | 5 | 66.3 | 1600 | ○ | ○ | Δ |
| Comparative Example 3 | 0 | 0.1 | 1700 | 1320 | 98.4 | 1.52 | Methyl. Hydroxyl | 60 | 64.5 | 650 | ○ | × | × |
| Comparative Example 4 | | | | | | | | 15 | 64.0 | 1750 | ○ | × | × |
| Comparative Example 5 | 0 | 0 | 500 | Not modified | 98.2 | 1.71 | Methyl, Hydroxyl | 60 | 65.3 | 56 | ○ | ○ | ○ |
| Comparative Example 6 | | | | | | | | 15 | 67.2 | 43 | ○ | ○ | ○ |
| Example 8 | 0.2 | 0.55 | 1700 | 190 | >99.95 | 0.23 | Methyl, Hydroxyl, Aldehyde, Lactone ring, Carboxyl | 60 | 64.5 | 650 | ○ | ○ | Δ |
| Example 9 | | | | | | | | 15 | 64.0 | 1750 | ○ | ○ | Δ |

### (Example 10)

### (Production of a polyvinyl acetal film)

The modified polyvinyl acetal resin (8 parts by weight) obtained in Example 4 was added to a mixed solvent containing toluene (50 parts by weight) and ethanol (50 parts by weight), and stirred to be dissolved therein while being heated at 50°C. The resulting resin solution was applied onto a PET film preliminarily subjected to mold release treatment in such a manner that the dried resin has a thickness of 20 µm using a coater. After air-drying at ambient temperature for 10 minutes, the resin was peeled from the PET film to give a polyvinyl acetal film.

### (Preparation of a ceramic slurry composition)

The obtained modified polyvinyl acetal resin (8 parts by weight) was added to a mixed solvent containing toluene (50 parts by weight) and ethanol (50 parts by weight), and stirred to be dissolved therein while being heated at 50°C. To the solution, dibutyl phthalate (4 parts by weight) was added as a plasticizer and stirred to be dissolved therein. To the resulting resin solution, barium titanate (BT-03, an average particle diameter 0.3 µm, SAKAI CHEMICAL INDUSTRY CO., LTD.) (100 parts by weight) was added as ceramic powder. The mixture was mixed using a ball mill for 48 hours to give a ceramic slurry composition.

### (Production of a ceramic green sheet)

The obtained ceramic slurry composition was applied onto a PET film preliminarily subjected to mold release treatment in such a manner that the dried resin has a thickness of 2 µm using a coater. After air-drying at ambient temperature for 10 minutes, the composition was heated at 80°C for 30 minutes to give a ceramic green sheet.

### (Examples 11 to 13)

Polyvinyl acetal films, ceramic slurry compositions, and ceramic green sheets were produced in the same manner as in Example 10, except that the modified polyvinyl acetals obtained in Examples 5 to 7 were respectively used.

### (Reference Examples 1 to 4)

Polyvinyl acetal films, ceramic slurry compositions, and ceramic green sheets were produced in the same manner as in Example 10, except that the modified polyvinyl acetal resins obtained in Examples 4 to 7 were respectively used and the dissolution temperature was set to 15°C in the Production of a polyvinyl acetal film and Preparation of a ceramic slurry composition.

### (Comparative Example 7)

### (Production of a polyvinyl acetal film, a ceramic slurry composition, and a ceramic green sheet)

A polyvinyl acetal film, a ceramic slurry composition, and a ceramic green sheet were produced in the same manner as in Example 10, except that polyvinyl butyral obtained in Comparative Example 3 was used.

### (Comparative Example 8)

A polyvinyl acetal film, a ceramic slurry composition, and a ceramic green sheet were produced in the same manner as in Example 10, except that the modified polyvinyl acetal resin obtained in Comparative Example 3 was used and the dissolution temperature was set to 15°C in the Production of a polyvinyl acetal film and Preparation of a ceramic slurry composition.

### (Comparative Example 9)

### (Production of a polyvinyl acetal film, a ceramic slurry composition, and a ceramic green sheet)

A polyvinyl acetal film, a ceramic slurry composition, and a ceramic green sheet were produced in the same manner as in Example 10, except that the polyvinyl butyral obtained in Comparative Example 5 was used.

### (Comparative Example 10)

A polyvinyl acetal film, a ceramic slurry composition, and a ceramic green sheet were produced in the same manner as in Example 10, except that the modified polyvinyl acetal resin obtained in Comparative Example 5 was used and the dissolution temperature was set to 15°C in the Production of a polyvinyl acetal film and Preparation of a ceramic slurry composition.

### (Comparative Example 11)

### (Production of a polyvinyl acetal film, a ceramic slurry composition, and a ceramic green sheet)

A polyvinyl acetal film, a ceramic slurry composition, and a ceramic green sheet were produced in the same manner as in Example 10, except that the polyvinyl butyral obtained in Comparative Example 6 was used.

### (Comparative Example 12)

A polyvinyl acetal film, a ceramic slurry composition, and a ceramic green sheet were produced in the same manner as in Example 10, except that the modified polyvinyl acetal resin obtained in Comparative Example 6 was used and the dissolution temperature was set to 15°C in the Production of a polyvinyl acetal film and Preparation of a ceramic slurry composition.

The polyvinyl acetal films and ceramic green sheets produced in the examples, reference examples, and comparative examples were evaluated with regard to the following items. Table 3 shows the results.

### (8) Elastic modulus in tension, maximum point stress, and elongation at break of a polyvinyl acetal film

The elastic modulus in tension, maximum point stress, and elongation at break of each polyvinyl acetal film were measured by a method in conformity with JIS K 7113, using a TENSILON (ORIENTEC Co., LTD.).

A test sample was in a size of 50 mm in length x 20 mm in width. The test rate was 50 mm/min.

### (9) Film forming property

The surface of each obtained ceramic green sheet was observed in a microscope for evaluation of the film forming property of the ceramic slurry composition.

The evaluation was performed based on the following criteria: "○" in the case where the formed ceramic green sheet was smooth and no undissolved matters were observed thereon; and "X" in the case where many undissolved matters were observed on the surface of the ceramic green sheet.

### (10) Elastic modulus in tension and maximum point stress of a ceramic green sheet

In conformity with JIS K 7113, the elastic modulus in tension and maximum point stress of the ceramic green sheets were measured using a TENSILON (ORIENTEC Co., LTD.).

A test sample was in a size of 20 mm in length x 10 mm in width. The testing rate was 50 mm/min.

**[Table 3]**

| | Polyvinyl acetal used | Temperature at dissolution (°C) | Polyvinyl acetal film | | | Ceramic green sheet | | |
|---|---|---|---|---|---|---|---|---|
| | | | Elastic modulus in tension (MPa) | Maximum point stress (MPa) | Elongation at break (%) | Film forming property | Elastic modulus in tension (MPa) | Maximum point stress (MPa) |
| Example 10 | Example 4 | 50 | 1280 | 75 | 180 | ○ | 1350 | 37 |
| Example 11 | Example 5 | 50 | 1300 | 71 | 175 | ○ | 1420 | 40 |
| Example 12 | Example 6 | 50 | 1360 | 76 | 170 | ○ | 1400 | 38 |
| Example 13 | Example 7 | 50 | 1420 | 70 | 160 | ○ | 1480 | 39 |
| Reference Example 1 | Example 4 | 15 | 1020 | 45 | 120 | × | 1250 | 23 |
| Reference Example 2 | Example 5 | 15 | 980 | 40 | 135 | × | 1180 | 24 |
| Reference Example 3 | Example 6 | 15 | 1030 | 46 | 130 | × | 1230 | 26 |
| Reference Example 4 | Example 7 | 15 | 970 | 32 | 125 | × | 1020 | 19 |
| Comparative Example 7 | Comparative Example 3 | 50 | 1210 | 36 | 95 | × | 1310 | 18 |
| Comparative Example 8 | Comparative Example 3 | 15 | 1260 | 33 | 70 | × | 1290 | 20 |
| Comparative Example 9 | Comparative Example 5 | 50 | 830 | 50 | 145 | ○ | 980 | 30 |
| Comparative Example 10 | Comparative Example 5 | 15 | 900 | 56 | 138 | ○ | 950 | 24 |
| Comparative Example 11 | Comparative Example 6 | 50 | 850 | 54 | 140 | ○ | 890 | 26 |
| Comparative Example 12 | Comparative Example 6 | 15 | 800 | 53 | 143 | ○ | 840 | 21 |

### INDUSTRIAL APPLICABILITY

The present invention uses a modified polyvinyl alcohol enabling to produce polyvinyl acetal that is excellent in solubility in a solvent even with a low degree of polymerization while hardly causing reaction inhibition, coloring, and particle coarsening.

The present invention provides a method for producing a modified polyvinyl acetal that is excellent in solubility in a solvent even with a low degree of polymerization, and has high elasticity, mechanical strength, and film forming property. A polyvinyl acetal film may be produced from the modified polyvinyl acetal, as well as a ceramic slurry composition and a ceramic green sheet.

The modified polyvinyl acetal obtained by the method of the present invention is usable in various fields such as binders for ceramics, inks and coatings, and silver films.

## Claims

1. A method for producing a modified polyvinyl acetal and comprising the steps of:
step (1) of bringing polyvinyl alcohol into contact with hydrogen peroxide in a basic solution for reduction in a degree of polymerization, thereby preparing a modified polyvinyl alcohol, and
step (2) of reacting the modified polyvinyl alcohol prepared in the step (1) with aldehyde in a system acidified by an acid catalyst for acetalization of the modified polyvinyl alcohol,
wherein the basic solution has a hydrogen peroxide concentration of not higher than 0.5 mol/L at the time of the contact of the polyvinyl alcohol and the hydrogen peroxide in the step (1), and
wherein the modified polyvinyl acetal is a modified polyvinyl acetal obtainable by acetalization of a modified polyvinyl alcohol comprising at least one functional group selected from the group consisting of hydroxyl, aldehyde, carboxyl, and lactone ring groups at a molecular end, and having a degree of saponification of 99.95 mol% or higher and a 1,2-glycol bond content of 1.4 mol% or lower.

2. The method for producing a modified polyvinyl acetal according to Claim 1,
wherein the basic solution has an OH⁻ ion concentration of 0.01 to 1 mol/L.

3. The method for producing a modified polyvinyl acetal according to Claim 1 or 2,
wherein the reduction in a degree of polymerization of the polyvinyl alcohol in the step (1) is carried out along with dissolution of the polyvinyl alcohol.

4. The method for producing a modified polyvinyl acetal according to Claim 1, 2 or 3,
wherein the system has a hydrogen peroxide concentration of 0.1 mol/L or lower at the time of the acidification by the acid catalyst in the step (2).

5. The method for producing a modified polyvinyl acetal according to Claim 1, 2, 3 or 4,
wherein the system has a hydrogen peroxide concentration of 0.1 mol/L or lower at the time of the contact of the modified polyvinyl alcohol and the aldehyde in the step (2).

6. The method for producing a modified polyvinyl acetal according to Claim 1, 2, 3, 4 or 5,
wherein the contact of the modified polyvinyl alcohol and the aldehyde in the step (2) is performed at a temperature of 5 to 70°C.

## Patentansprüche

1. Verfahren zum Herstellen eines modifizierten Polyvinylacetals, umfassend die Schritte:
Schritt (1) des Inkontaktbringens eines Polyvinylalkohols mit Wasserstoffperoxid in einer basischen Lösung zur Reduktion eines Polymerisationsgrades, wodurch ein modifizierter Polyvinylalkohol hergestellt wird, und
Schritt (2) des Reagierens des in Schritt (1) hergestellten modifizierten Polyvinylalkohols mit einem Aldehyd in einem durch einen Säurekatalysator angesäuerten System zur Acetalisierung des modifizierten Polyvinylalkohols,
wobei die basische Lösung eine Wasserstoffperoxidkonzentration von nicht mehr als 0,5 Mol/L zur Zeit des Kontakts des Polyvinylalkohols und des Wasserstoffperoxids in Schritt (1) aufweist und
wobei das modifizierte Polyvinylacetal ein modifiziertes Polyvinylacetal ist, das durch Acetalisierung eines modifizierten Polyvinylalkohols erhältlich ist, das wenigstens eine funktionelle Gruppe umfasst, die aus der aus Hydroxyl-, Aldehyd-, Carboxyl- und Lactonringgruppen an einem molekularen Ende bestehenden Gruppe ausgewählt ist, und das einen Verseifungsgrad von 99,95 Mol-% oder mehr und einen 1,2-Glykolbindungsgehalt von 1,4 Mol-% oder weniger aufweist.

2. Verfahren zum Herstellen eines modifizierten Polyvinylacetals nach Anspruch 1,
wobei die basische Lösung eine OH⁻-Ionenkonzentration von 0,01 bis 1 Mol/L aufweist.

3. Verfahren zum Herstellen eines modifizierten Polyvinylacetals nach Anspruch 1 oder 2,
wobei die Reduktion des Polymerisationsgrades des Polyvinylalkohols im Schritt (1) zusammen mit Lösen des Polyvinylalkohols durchgeführt wird.

4. Verfahren zum Herstellen eines modifizierten Polyvinylacetals nach Anspruch 1, 2 oder 3,
wobei das System eine Wasserstoffperoxidkonzentration von 0,1 Mol/L oder weniger zur Zeit der Ansäuerung durch den Säurekatalysator in Schritt (2) aufweist.

5. Verfahren zum Herstellen eines modifizierten Polyvinylacetals nach Anspruch 1, 2, 3 oder 4,
wobei das System eine Wasserstoffperoxidkonzentration von 0,1 Mol/L oder weniger zur Zeit des Kontakts des modifizierten Polyvinylalkohols und des Aldehyds in Schritt (2) aufweist.

6. Verfahren zum Herstellen eines modifizierten Polyvinylacetals nach Anspruch 1, 2, 3, 4 oder 5,
wobei der Kontakt des modifizierten Polyvinylalkohols und des Aldehyds in Schritt (2) bei einer Temperatur von 5 bis 70°C durchgeführt wird.

## Revendications

1. Procédé de production d'un polyvinylacétal modifié et comprenant les étapes de :
étape (1) de mise en contact de poly(alcool vinylique) avec du peroxyde d'hydrogène dans une solution basique pour une réduction d'un degré de polymérisation, préparant par là un poly(alcool vinylique) modifié, et
étape (2) de réaction du poly(alcool vinylique) modifié préparé dans l'étape (1) avec un aldéhyde dans un système acidifié par un catalyseur acide pour une acétalisation du poly(alcool vinylique) modifié,
dans lequel la solution basique présente une concentration en peroxyde d'hydrogène d'au plus 0,5 mol/L au moment du contact du poly(alcool vinylique) et du peroxyde d'hydrogène dans l'étape (1), et
dans lequel le polyvinylacétal modifié est un polyvinylacétal modifié pouvant être obtenu par acétalisation d'un poly(alcool vinylique) modifié comprenant au moins un groupe fonctionnel choisi dans le groupe constitué de groupes hydroxyle, aldéhyde, carboxyle et noyau lactone à une extrémité moléculaire, et présentant un degré de saponification de 99,95 % en mole ou supérieur et une teneur en liaison 1,2-glycol de 1,4 % en mole ou inférieure.

2. Procédé de production d'un polyvinylacétal modifié selon la revendication 1,
dans lequel la solution basique présente une concentration en ion OH⁻ de 0,01 à 1 mol/L.

3. Procédé de production d'un polyvinylacétal modifié selon la revendication 1 ou 2,
dans lequel la réduction d'un degré de polymérisation du poly(alcool vinylique) dans l'étape (1) est réalisée avec une dissolution du poly(alcool vinylique).

4. Procédé de production d'un polyvinylacétal modifié selon la revendication 1, 2 ou 3,
dans lequel le système présente une concentration en peroxyde d'hydrogène de 0,1 mol/L ou inférieure au moment de l'acidification par le catalyseur acide dans l'étape (2).

5. Procédé de production d'un polyvinylacétal modifié selon la revendication 1, 2, 3 ou 4,
dans lequel le système présente une concentration en peroxyde d'hydrogène de 0,1 mol/L ou inférieure au moment du contact du poly(alcool vinylique) modifié et de l'aldéhyde dans l'étape (2).

6. Procédé de production d'un polyvinylacétal modifié selon la revendication 1, 2, 3, 4 ou 5,
dans lequel le contact du poly(alcool vinylique) modifié et de l'aldéhyde dans l'étape (2) est réalisé à une température de 5 à 70°C.
